Europäisches Patentamt

European Patent Office

Office européen des brevets

(11) Publication number: **0 222 938**
**A1**

(12) **EUROPEAN PATENT APPLICATION**

(21) Application number: 85307721.2

(22) Date of filing: 25.10.85

(51) Int. Cl.⁴: **B60L 13/10 , B60L 13/06**

(43) Date of publication of application:
27.05.87 Bulletin 87/22

(84) Designated Contracting States:
DE FR GB

(71) Applicant: FUJI ELECTRIC CO., LTD.
1-1, Tanabeshinden, Kawasaki-ku
Kawasaki-shi Kanagawa 210(JP)
Applicant: FUJI ELECTRIC CORPORATE
RESEARCH AND DEVELOPMENT LTD.
2-1, Nagasaka 2-chome
Yokosuka-shi Kanagawa-ken(JP)

(72) Inventor: Yamamura, Sakae
Izumi 2614
Komae-shi Tokyo 201(JP)
Inventor: Yamaguchi, Hitoshi
361-280
Wakamatsu-cho Chiba 280(JP)

(74) Representative: Gordon, Martin et al
G.F. Redfern & Company Marlborough Lodge
14 Farncombe Road
Worthing West Sussex, BN11 2BT(GB)

(54) **Rail for use in magnetic propulsive levitation apparatus.**

(57) A coach member 3 travels on a track member 9 provided with two composite rails 70 arranged to interact with levitation and guide electromagnets 5,6. Each composite rail 70 has a trapezium cross-section made up be means of a stack of ferromagnetic plates (to minimise eddy current losses) whose side form mutually perpendicular lower and lateral sides of the rail 70. Thus the flux from the electromagnets 5,6 is directed through the sides of the laminations to reduce magnetic resistance and eddy current losses. The fluxes due to the two types of electromagnet can be arranged to at least partially cancel each other out within the rail 70.

EP 0 222 938 A1

Fig. 4

## RAIL FOR USE IN MAGNETIC PROPULSIVE LEVITATION APPARATUS

The present invention relates to a magnetic rail for a magnetic levitation railway which supports and guides a vehicle in a contact-free manner by supporting as well as horizontally guiding the vehicle by means of magnetic force between the magnetic rail, composed of a ferromagnetic material such as iron, and an electromagnetic arrangement provided on the vehicle.

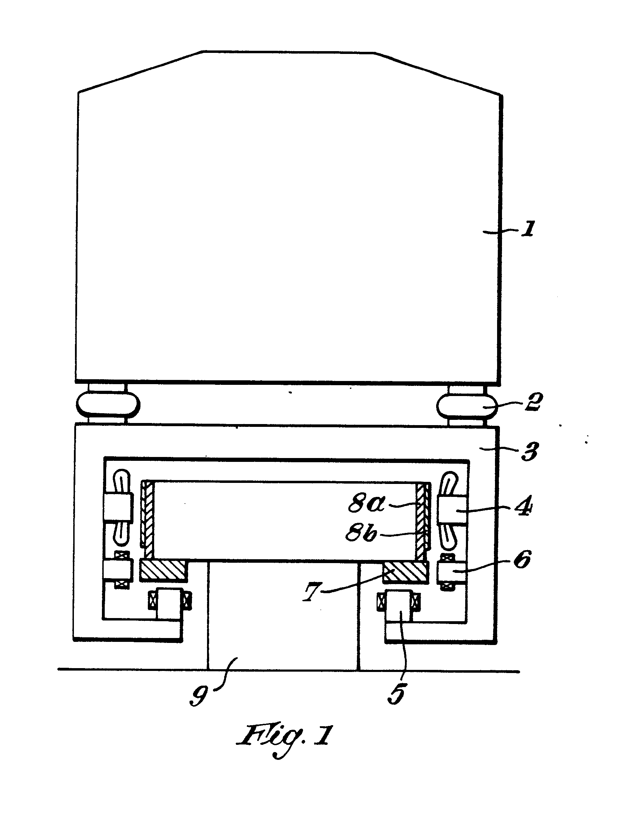

Fig. 1 is a sectional view illustrating an example of constitution of magnetic levitation railway of this kind. In this figure, a coach 1 is shown mounted on a truck 3 by means of a spring arrangement 2. The truck 3 is provided with an armature 4 of a linear induction motor (LIM) for propelling the coach, an electromagnet 5 for supporting the coach and an electromagnet 6 for guiding the coach. At both side surfaces of track 9, a secondary iron core 8a and secondary conductor 8b of the LIM are provided opposite the armature 4 of the LIM and magnetic rails 7 used both for supporting and guiding the coach are provided on both sides of the lower surface of the track 9, with the lower surface of each rail opposed to the electromagnet 5 for levitation and the side surface of each rail opposed to the electromagnet 6 for guidance.

The truck 3 can thus be levitated away from the track 9 by controlling current to the electromagnet 5 and guided to the right and left by controlling a magnetic force between the magnetic rail 7 and said guide electromagnet 6. Simultaneously, the coach is propelled along the track 9 by means of an electromagnetic force generated between the armature 4 and secondary conductor 8b of the LIM through control of the current in the LIM armature.

Propulsive levitation apparatus of this kind is required to be small in size and light weight with low power consumption. The apparatus should ensure excellent tracking ability even over irregular stretches of track by providing the necessary electromagnetic force and electromagnetic spring constant in order to prevent contact with the track during travelling, and to save construction and running costs. Accordingly, the magnetic rail is required to exhibit small losses due to eddy currents generated by the magnetic flux from the levitation and guide electromagnets while the coach is travelling in order to save on construction and maintenance costs. The system as shown in Fig. 1 where the levitation and guide electromagnets are arranged to comprise the salient-pole type so that the N-pole and S-pole are alternately arranged along the direction of travel to meet the requirements mentioned above by minimising inductance and leakage of magnetic flux of the electromagnets, making the electromagnet light in weight and optimising the tracking ability.

In general, when a coach of this type is running on the basis of magnetic levitation, an eddy current loss is produced and a magnetic resistance force is generated relative to the magnetic rail due to the magnetic fields generated by the electromagnets 5 and 6. Particularly in the case of a salient-pole type of electromagnet, since in general the pole pitch is small, the magnetic rail is generally formed by stacking ferromagnetic plates or by combining ferromagnetic wires in order to reduce eddy current losses.

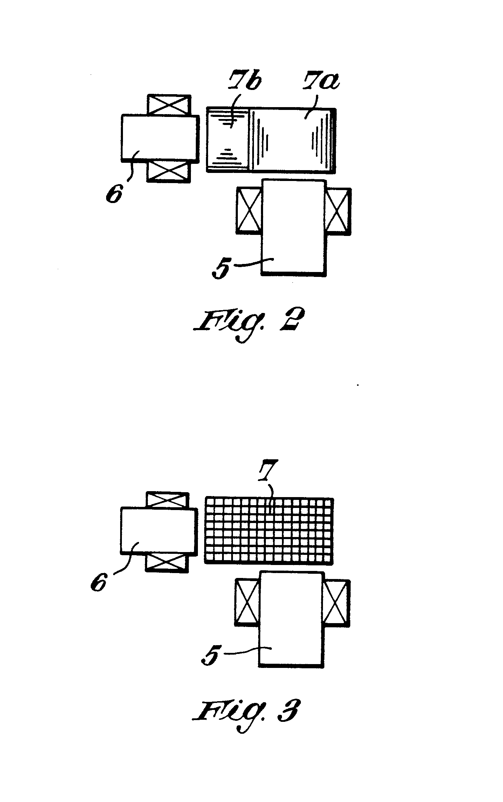

In Fig. 2 there is shown an example of propulsive levitation apparatus in the prior art, wherein a magnetic levitation rail 7a and a guide rail 7b are formed in combination, each rail being formed by stacking ferromagnetic material plates with surfaces opposed to magnetic poles, in order to suppress generation of eddy currents.

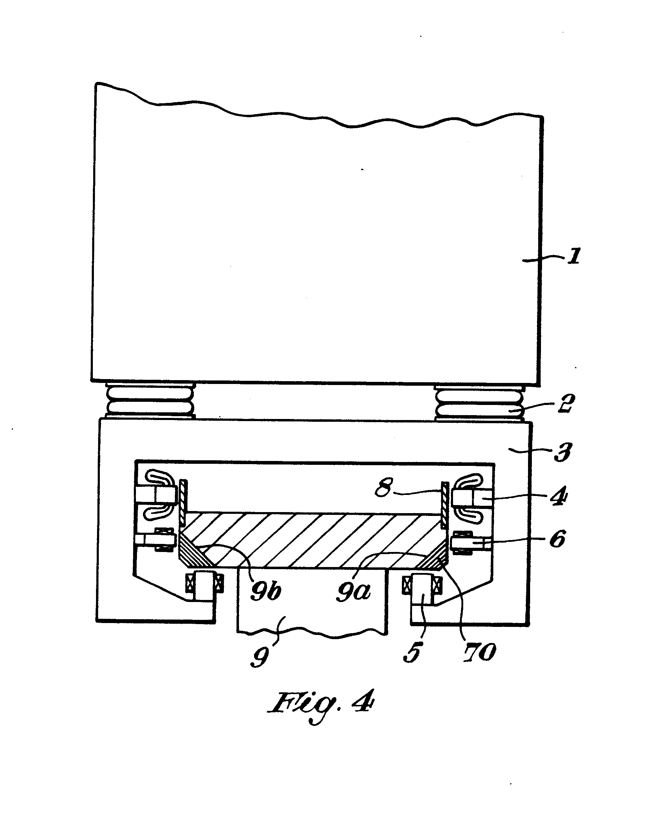

In Fig. 3 there is shown an alternative magnetic rail arrangement previously proposed. A magnetic levitation and guide rail 7 is formed by combining wire material 7c, consisting of insulated ferromagnetic material, in order to suppress eddy currents which might be generated in the magnetic rail 7 due to the magnetic fields generated by the electromagnets 5 and 6.

If the magnetic rail 7 employs the layered structure as shown in Fig. 2 two kinds of magnetic rails are required in different stacking directions for levitation and guidance and this results in an increase in the cost of manufacturing the magnetic rail 7. The structure comprising combined wire material shown in Fig. 3 has the disadvantage that a high degree of quality control is required because formation is entirely dependent on the bonding for combining the wire material. Magnetic resistance in the sectional direction becomes high because insulation is necessary between the strands of ferromagnetic material, so that the excitation current levels for the electromagnets must be raised.

It is an aim of the present invention to provide a magnetic rail for levitation and guidance of which the sectional area can be reduced without increasing magnetic resistance and eddy-current losses, and whose construction is strong and of low cost.

According to the present invention there is provided a rail for use in propulsive levitation apparatus for use in magnetic levitation railway, said rail comprising a laminated core of ferromagnetic plates, said core having a tapering cross-section with said plates extending between two converging sides of the core, whereby said converging sides can be respectively arranged opposite levitation and guide electromagnets of the railway.

Embodiments of the present invention will now be described, by way of example, with reference to the accompanying drawings in which:-

Fig. 1 is a cross-sectional view of a known basic form of propulsive levitation apparatus;

Figs. 2 and 3 are respective cross-sectional diagrams of different forms of known propulsive levitation apparatus;

Fig. 4 is a cross-sectional view of a form of propulsive levitation apparatus embodying this invention;

Figs. 5 and 6 are respective cross-sectional views on a larger scale of two different possible forms of a portion of the apparatus shown in Fig. 4; and

Fig. 7 is a schematic diagram illustrating flux flows in operation of the apparatus shown in Fig. 4.

In Fig. 4 there is shown a magnetic levitation railway having a magnetic rail 70 provided at both sides of a track 9 and extending along the direction of travel. Levitation electromagnets 5 and guide electromagnets 6 of the salient-pole type are provided on both sides of a truck so that the N - (North)-poles and S (South)-poles are arranged alternately along the length of the truck and are laterally symmetrical. The levitation electromagnets 5 are arranged on the truck 3 so that the magnetic poles are opposite the lower surface of the magnetic rail 70 and the guide electromagnets 65 are opposite a lateral surface of the magnetic rail 70.

The magnetic rail 70 is produced by mutually bonding ferromagnetic plates (such as iron) to form them into a laminated iron core of trapezium cross-section as shown in Fig. 4. The converging sides of the trapezium are substantially mutually perpendicular so as to provide a horizontal lower surface and a vertical lateral surface for respective co-operation with the electromagnets 5 and 6. The base of the trapezium is bonded to support portions 9a, 9b of the track extending at 45 degrees to the lower and lateral sides of the trapezium.

Since the interfaces between the ferromagnetic plates extend between and terminate at the lower and lateral surfaces of the rail 70, the fluxes produced by the levitation and guide electromagnets pass through the magnetic rail parallel with the interfaces through both sides of each ferromagnetic plate. Therefore, there is less magnetic resistance which the flux passes through the interfaces and the eddy-current losses are reduced because of the small effect of the flux component passing through the ferromagnetic plates.

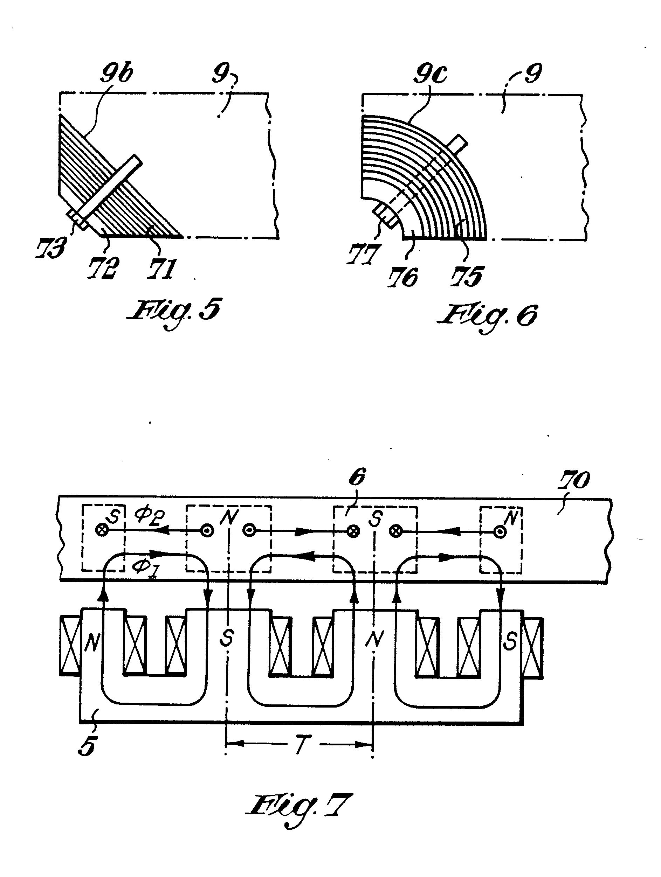

In Fig. 5 there is shown a laminated iron core 71 formed into a trapezium by the mutual bonding of ferromagnetic plates and press-fixed together by means of a fixing member such as a bolt 73 passing through the iron core 71 at right-angles to the laminations through a keep plate 72, so that the widest ferromagnetic plate is held against support portion 9b of the track. The magnetic rail can be even more securely fixed to the track by adhesive-bonding of the contact surface to the support portion 9b. The laminated iron core 71 is formed into the trapezoid cross-section form by mutually bonding the ferromagnetic plates of different widths or by cutting the bonded plates of the laminated iron core. In both cases, processing operations for producing the magnetic rail can be decreased as compared with a conventional magnetic rail, and thus the magnetic rail can be produced at low cost.

In Fig. 6 there is shown a laminated iron core 75 formed into a sector that is substantially a quadrant and the laminations are press-fixed to the support portion 9c provided on the track 9 through a concave keep plate 76 by means of a fixing member 77 such as a bolt.

In this embodiment the flux flow is improved compared with the embodiment shown in Fig. 5 because at both sides of the laminations, the interface between the ferromagnetic plates are arranged parallel to (i.e. at right-angles to the relevant surfaces of the rail) the direction of the lines of flux produced by the levitation and guide electromagnets. The laminated iron core 75 can be readily formed by forming the ferromagnetic plates into cylinders with an adhesive applied and then cutting to form a quadrant sector.

In Fig. 7 there is illustrated the flux flow in the embodiment shown in Fig. 4. The levitation electromagnet 5 is fixed to the truck opposite the lower side of the magnetic rail 70 and is constructed so that the N-pole and S-pole are alternately arranged with pole pitch T in the direction of movement of the truck. The guide electromagnet 6 is arranged relative to the magnetic rail so as to correspond with the centre of the pole due to the levitation electromagnet as indicated in broken lines in Fig. 7. The magnetic poles for levitation and guidance can be disposed so that like poles are in correspondence or so that opposite poles are in correspondence, i.e. N-pole and S-pole are opposite each other. In the case of this latter construction, as shown in Fig. 7 flux $\emptyset_1$ produced by the levitation electromagnet 5 and flux $\emptyset_2$ produced by the guide electromagnet 6 are arranged to be directed in opposite directions within the magnetic rail 70. Therefore, the fluxes which enter the ferromagnetic plates of the core of the rail 70 from the lower surface and the lateral surface of the magnetic rail negate each other within the feromagnetic plates, decreasing the net flux within the magnetic rail, and thus it is possible to decrease the sectional area of magnetic rail compared with that for conventional structures as shown in Figs. 1 and 2 and effectively to employ a structure where each one of the ferromagnetic plates provides a common flux course communicating with the lower surface opposite the levitation electromagnet and the side surface opposite the guide electromagnet.

In the embodiments described above, the magnetic rails each comprise a laminated iron core of trapezium (quadrilateral with one pair of opposite sides parallel) or trapezoidal (quadrilateral with no parallel sides) cross-section subtending a corner angle which is substantially a right-angle or of a sectoral cross-section that is substantially a quadrant with the lower surface and the lateral surface of the magnetic rail being arranged opposite the levitation electromagnet and the guide electromagnet, respectively. As a result, since the fluxes due to the levitation and the guide electromagnets pass through the ferromagnetic plates substantially parallel with the interfaces between the ferromagnetic plates, it is possible to provide a magnetic rail in which the magnetic resistance is low compared to conventional structures because the fluxes do not pass through the interfaces and the eddy-current losses are small because of the small transverse flux component at right-angles to the lengths of the ferromagnetic plates.

Furthermore, the use of mechanical press-fixing, by means of bolts for example, in addition to adhesive bonding to secure the ferromagnetic plates together and to the track supporting the rail, provides a magnetic rail that is mechanically strong, easy to produce and of low cost as compared with conventional structures such as where wires are adhesive bonded.

When the fluxes produced by means of the levitation and the guide electromagnets are arranged to cancel each other within the magnetic rail, a decrease is obtained in the flux passing through the magnetic rail, so that the sectional area of the magnetic rail can be reduced. Thus, it is possible to provide a magnetic levitation railway equipped with a levitation guide magnetic rail of light weight, low cost and consuming little electric power.

A rail for use in propulsive levitation apparatus for use in magnetic levitation railway, said rail comprising a laminated core 70 of ferromagnetic plates 71,75, said core 70 having a tapering cross-section with said plates 71,75 extending between two converging sides of the core, whereby said converging sides can be respectively arranged opposite levitation and guide electromagnets 5,6 of the railway.

## Claims

1. A rail for use in propulsive levitation apparatus for use in magnetic levitation railway, said rail comprising a laminated core of ferromagnetic plates, said core having a tapering cross-section with said plates extending between two converging sides of the core, whereby said converging sides can be respectively arranged opposite levitation and guide electromagnets of the railway.

2. A rail according to claim 1 wherein said converging sides are substantially mutually perpendicular.

3. A rail according to any one of the preceding claims, wherein at least one bolt extends from a corner portion between said converging sides through the rail whereby the composite rail is held securely together.

4. A rail according to any one of the preceding claims wherein said cross-section comprises a trapezium cross-section.

5. A rail according to any one of claims 1 to 3, wherein said cross-section has a curved outwardly convex side between the diverging end portions of said converging sides, said ferromagnetic plates being curved to match said convex side.

6. A rail according to claim 5 wherein said cross-section is substantially a quadrant.

7. Magnetic propulsive levitation apparatus for use in a railway and comprising a track member and a coach member, one of which carries a composite rail according to any one of the preceding claims, said converging sides of the rail being respectively opposite levitation and guide electromagnets mounted on the other of said members,.

8. Apparatus according to claim 7, wherein the levitation and guide electromagnets are distributed along said other member and arranged so that each levitation electromagnet provides a first pole whose centre lies in the same plane perpendicular to the direction of travel as the center of a second pole of opposite polarity to the first pole and provided by a corresponding one of the guide electromagnets so that at least partial cancellation of the fluxes from the two types of electromagnet takes place within said rail.

9. Apparatus according to claim 7 or claim 8 wherein said one member is the track member.

10. Apparatus according to claim 9 wherein said track member has two of said composite rails.

11. A magnetic levitation railway including a track and at least one coach provided with apparatus according to any one of claims 7 to 10.

*Fig. 1*

Fig. 2

Fig. 3

*Fig. 4*

Fig. 5

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 144 000 (FUJI)<br>* Page 14, line 2 - page 18, line 6; figures 8-11 * | 1-11 | B 60 L 13/10<br>B 60 L 13/06 |
| | --- | | |
| X | FR-A-2 169 411 (HOVERCRAFT)<br><br>* Page 4, line 28 - page 5, line 34; figures 1,2 * | 1-4,7, 9-11 | |
| A | | 8 | |
| | ----- | | |

TECHNICAL FIELDS
SEARCHED (Int. Cl.4)

B 60 L 13/00

The present search report has been drawn up for all claims

| Place of search | Date of completion of the search | Examiner |
|---|---|---|
| THE HAGUE | 04-07-1986 | TIELEMANS H.L.A. |

EPO Form 1503 03.82